(19) Europäisches Patentamt
European Patent Office
Office européen des brevets

(11) Publication number : 0 529 936 A1

# (12) EUROPEAN PATENT APPLICATION

(21) Application number : 92307600.4

(22) Date of filing : 20.08.92

(51) Int. Cl.$^5$ : C08G 61/02, C08L 63/00, C08L 63/02

(30) Priority : 23.08.91 JP 211950/91

(43) Date of publication of application : 03.03.93 Bulletin 93/09

(84) Designated Contracting States : CH DE FR GB LI NL

(71) Applicant : MITSUI TOATSU CHEMICALS, Inc.
2-5 Kasumigaseki 3-chome
Chiyoda-Ku Tokyo 100 (JP)

(72) Inventor : Ando, Shinji
7-11-20, Arima, Miyamae-ku
Kawasaki-shi, Kanagawa-ken (JP)
Inventor : Fukui, Yukio
21, Kasubatacho 1-Chome, Minami-ku
Nagoya-shi, Aichi-ken (JP)
Inventor : Iimuro, Shigeru
5-6-I-104, Takiharucho, Minami-ku
Nagoya-shi, Aichi-ken (JP)

(74) Representative : Holdcroft, James Gerald, Dr. et al
Graham Watt & Co., Riverhead
Sevenoaks, Kent TN13 2BN (GB)

## (54) Epoxy resin compositions.

(57) Epoxy resin compositions and their cured compositions comprise, as essential components, an epoxy resin and a phenolic resin of a structure formed by crosslinking a phenolic compound with particular trifunctional aromatic residual groups. Preferably, the phenolic resin and the epoxy resin are mixed at such a ratio that 0.5-1.5 moles of hydroxyl groups of the phenolic resin are contained per mole of epoxy groups of the epoxy resin. The resin compositions are low in modulus of elasticity, coefficient of linear expansion and water absorption and are excellent in heat resistance and solder cracking resistance. The resin compositions can be used as semiconductor sealants owing to their superb solder cracking resistance.

EP 0 529 936 A1

## BACKGROUND OF THE INVENTION

### a) Field of the Invention

This invention relates to epoxy resin compositions. Specifically, this invention is concerned with epoxy resin compositions which are low in modulus of elasticity, coefficient of linear expansion and water absorption and excellent in heat resistance and solder cracking resistance.

### b) Description of the Related Art

The so-called resin sealing method making use of an epoxy resin or the like has been widely practiced to date as a method for sealing semiconductor devices such as diodes, transistors, ICs and LSIs. In particular, resin compositions composed of an epoxy resin and/or a phenolic novolak resin as a principal component are employed primarily in the resin sealing method for the economy of their raw materials and also for their excellent heat resistance, moldability and electrical characteristics.

Recent advance in the semiconductor-device-related technology is, however, faster and also more diversified beyond expectation, resulting in the occurrence of various problems which cannot be overcome by the conventional method in which a resin composition composed of an epoxy resin and/or a phenolic novolak resin as a principal component.

For example, the size of a chip is increasing as a result of higher densification of an IC but, in contrast, a package tends to become smaller and thinner because of ever-increasing adoption of surface mounting. Namely, a need has arisen for the sealing of a large chip within a small and thin package. Cracks are thus formed by thermal stress upon sealing, thereby developing a serious problem.

In addition, a package itself is suddenly exposed to an elevated temperature of 200°C or higher in a soldering step. Moisture inside the package therefore undergoes abrupt expansion so that crackles are formed in the package. This has become a cause for reduced reliability of semiconductors.

A variety of epoxy resin compositions have been proposed with a view toward overcoming these problems. None has however yet brought about sufficient effects in this respect.

For example, Japanese Patent Laid-Open No. 105018/1984 proposes a sealing resin composition of a polycondensation product of phenol and an aralkyl ether. This resin composition is inferior in heat resistance due to its low glass transition temperature and is hence not satisfactory in solder cracking resistance although it is low and excellent in water absorption and modulus of elasticity.

Japanese Patent Laid-Open No. 168620/1986, on the other hand, proposes an epoxy resin composition excellent in heat resistance. Owing to the use of a polyfunctional epoxy resin, the composition enjoys an increased crosslinking density and hence excellent heat resistance. It however suffers from increased water absorption so that there is a high chance of development of cracks especially in a soldering step, thereby making the epoxy resin composition by no means satisfactory.

Japanese Patent Laid-Open No. 313519/1989 discloses an epoxy resin composition which features the inclusion of a trisphenol compound as a curing agent, said trisphenol compound containing three phenolic hydroxyl groups per molecule. In addition, Japanese Patent Laid-Open No. 128921/1991 discloses a composition making use of the above trisphenol compound as a curing agent and containing an epoxide of the trisphenol compound. As is demonstrated in some examples of Japanese Patent Laid-Open No. 84035/1987, however, these compounds are all crystalline compounds having a high melting point so that they are inferior in the efficiency of molding work to conventional phenolic novolak resin curing agents. As is also shown in certain examples of Japanese Patent Laid-Open No. 128921/1991, the above compositions are not fully satisfactory in solder cracking resistance.

## OBJECT AND SUMMARY OF THE INVENTION

The present inventors have found that the above problems can be overcome by using an epoxy resin composition comprising an epoxy resin and a phenolic resin, said phenolic resin having been obtained by reacting a particular trifunctional aromatic compound with a phenolic compound to crosslink the phenolic compounds with trifunctional aromatic residual groups. This has led to the completion of this invention.

In one aspect of this invention, there is thus provided an epoxy resin composition comprising as essential components:

(a) an epoxy resin, and

(b) a phenolic resin of a structure formed by crosslinking a phenolic compound with trifunctional aromatic residual groups represented by the following formula (1):

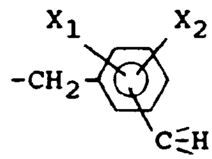

(1)

wherein $X_1$ and $X_2$ independently mean a hydrogen or halogen atom or a lower alkyl group.

The above epoxy resin composition according to this invention is low in modulus of elasticity, coefficient of linear expansion and water absorption and is excellent in heat resistance. It also has superb solder cracking resistance, thereby making it possible to use it as a sealant for semiconductors.

Also making use of the above-described characteristic properties, the epoxy resin composition can be used for coating, lamination, adhesion or a like purpose in a wide variety of fields. The epoxy resin composition is therefore extremely useful for industrial purposes.

## DETAILED DESCRIPTION OF THE INVENTION

The greatest feature of the epoxy resin composition according to this invention resides in that it has low modulus of elasticity, coefficient of linear expansion and water absorption in combination with excellent heat resistance. These properties are all extremely important as a sealing epoxy resin composition for semiconductors. Epoxy resin composition equipped with these properties *in toto* has not been known to date. All of these properties have now been fulfilled for the first time by using, as a curing agent for an epoxy resin, a phenolic resin of a specific structure obtained by crosslinking a phenolic compound with particular trifunctional aromatic residual groups.

The epoxy resin composition according to this invention contains, as essential components, an epoxy resin and a phenolic resin of a structure formed by crosslinking a phenolic compound with trifunctional aromatic residual groups represented by the above formula (1). The epoxy resin composition may also contain other additives, such as curing accelerators and various fillers, to extents not impairing the object of the present invention.

The phenolic resin employed in this invention can be obtained by subjecting a trifunctional aromatic compound, which is represented by the following formula (2):

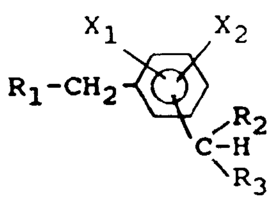

(2)

wherein $R_1$, $R_2$ and $R_3$ independently mean a hydroxyl group, a halogen atom or a $C_1$-$C_3$ lower alkoxyl group or $R_2$ and $R_3$ may together stand for an oxygen atom, and $X_1$ and $X_2$ independently mean a hydrogen or halogen atom or a lower alkyl group, and the phenolic compound to polycondensation (crosslinking).

Examples of the trifunctional aromatic compound represented by the formula (2) include α,α,α'-trihaloxylenes such as α,α,α'-trichloroxylene and α,α,α'-tribromoxylene; α,α,α'-trialkoxyxylenes such as α,α,α'-trimethoxyxylene and α,α,α'-triethoxyxylene; hydroxymethylbenzaldehyde; alkoxymethylbenzaldehyde; and halomethylbenzaldehydes.

On the other hand, illustrative of the phenolic compound include phenol, o-cresol, m-cresol, p-cresol, 2,6-xylenol, 4-methylcatechol, catechol, resorcin, 2,2-bis (p-hydroxyphenyl)propane, bis(p-hydroxyphenyl)methane, p-ethylphenol, p-t-butylphenol, p-t-octylphenol, o-phenylphenol, m-phenylphenol, p-phenylphenol, p-aminophenol, pyrrogallol, fluoroglucinol, a-naphthol, β-naphthol, phenanthrol and hydroxyanthracene.

The phenolic resin employed in the present invention preferably has a number average molecular weight of 350-2000 from the standpoint of the object of this invention.

In addition to the phenolic resin described above, one or more conventional phenolic resins such as novolak resins of the above phenolic compounds, phenolaralkyl resins, dicyclopentadiene-modified phenolic resins and/or resol-type phenolic resins can also be used as curing agents for the epoxy resin in combination with the phenolic resin. Preferably, these conventional phenolic resins can be used in combination up to 80 wt.% based on the phenolic resin as one of the essential components of the resin composition according to this

invention. Use of these conventional phenolic resins in a proportion greater than 80 wt.% is not preferred because the resulting resin composition may not retain the above-described greatest feature of the epoxy resin composition according to this invention, that is, low modulus of elasticity, coefficient of linear expansion and water absorption and excellent heat resistance.

With regard to the mixing ratio of the sum of the phenolic resin of the structure formed by crosslinking the phenolic compound by the trifunctional aromatic residual groups represented by the formula (1) and the conventional phenolic resin, said phenolic resins being curing agents for the epoxy resin, to the epoxy resin, it is preferable to mix the phenolic resins with the epoxy resin at such a ratio that 0.5-1.5 moles of hydroxyl groups of the phenolic resins are contained per mole of epoxy groups of the epoxy resin. Mixing ratios outside this range are not preferred as the resulting epoxy resin compositions may not fully have the above-described characteristic properties of the epoxy resin composition according to the present invention.

Exemplary epoxy resins usable in the present invention include glycidyl ethers of novolak resins making use of the above-described phenolic compounds, phenolaralkyl resins, dicyclopentadiene-modified phenolic resins and resol-type phenolic resins; glycidyl ethers of alcohols such as polyethylene glycol, polypropylene glycol and butanediol; glycidyl esters of resins of carboxylic acids such as phthalic acid, isophthalic acid, terephthalic acid and tetrahydrophthalic acid; glycidyl substitutes of compounds containing an active hydrogen atom bonded to a nitrogen atom such as aniline and isocyanuric acid; and alicyclic epoxy resins obtained by epoxylating inner olefins.

The softening points and epoxy equivalents of these epoxy resins usable in the present invention are preferably 60-100°C and 100-400, more preferably 65-90°C and 150-300, respectively. These epoxy resins can be used either singly or in combination.

Epoxy resins with a softening point or epoxy equivalent outside the above range are not preferred because the resulting epoxy resin compositions may not sufficiently have the above-described characteristic properties of the epoxy resin composition according to this invention.

For the epoxy resin composition according to this invention, it is possible to use as a curing accelerator, a compound which can accelerate the reaction between the epoxy groups of the epoxy resin and the hydroxyl groups of the phenolic resin as a curing agent.

Illustrative of the curing accelerator include amines such as trimethylamine, benzyldimethylamine, triethanolamine, tris(dimethylaminomethyl)phenol, triethylamine, triethylenetetramine, m-xylenediamine, dimethylbenzylamine; imidazoles such as 2-methylimidazole, 2-ethylimidazole, 1,2-dimethylimidazole, 2-ethyl -4-methylimidazole, 2-undecylimidazole and 2-phenylimidazole ; organic phosphines such as triphenylphosphine, tributylphosphine, tricyclohyexylphosphine, methyldiphenylphosphine, butylphenylphosphine, diphenylphosphine, phenylphosphine, octylphosphine and 1,2-bis(diphenylphosphino)methane; and tetraphenylborates such as tetraphenylphosphonium tetraphenylborate, triphenylphosphine tetraphenylborate, 2-ethyl-4 -methylimidazole tetraphenylborate, N-methylmorpholine tetraphenylborate.

The curing accelerator can be added preferably in a proportion of from 0.001 wt.% to 5 wt.% based on the epoxy resin. Proportions smaller than 0.001 wt.% are not preferred because too much time is required for the reaction between the epoxy groups of the epoxy resin and the hydroxyl groups of the curing agent. On the other hand, proportions greater than 5 wt.% are not preferred either because the resulting epoxy resin compositions may not sufficiently have the above-described characteristic properties of the epoxy resin composition according to this invention.

The epoxy resin composition according to this invention can also contain, as inorganic filler(s), one or more of crystalline silica, fused silica, alumina, clay, titanium white, zircon, boron, beryllia, magnesia, zirconia, forsterite, steatite, spinnel, mullite, titania, barium sulfate, silica glass, aluminum hydroxide, potassium titanate, silicon carbide, silicon nitride and glass fibers. Their preferred proportion can be in a range of 40-85 wt.% based on the epoxy resin composition. Proportions smaller than 40 wt.% result in lower mechanical strength but proportions greater than 85 wt.% lead to reduced fluidity. Proportions outside the above range are therefore not preferred.

The epoxy resin composition according to this invention can also be added with one or more additions as needed, for example, mold release agents such as higher fatty acids, metal salts of higher fatty acids, esters, natural waxes, synthetic waxes, acid amides and paraffins; flame retardants such as bromine compounds, antimony and phosphorus; colorants such as carbon black; silane coupling agents such as epoxy silanes, amino silanes, vinyl silanes, alkyl silanes and organic titanates; and flexibility imparting agents.

As a general method for producing the epoxy resin composition of this invention by using the raw materials described above, a mixture of the raw materials in prescribed proportions can be thoroughly mixed in a mixer or the like, kneaded through hot rolls, an extruder or the like, cooled and then ground.

To seal a semiconductor with the epoxy resin composition of this invention, low-pressure transfer molding is generally employed. Besides, injection molding, compression molding, casting or the like can be adopted.

The epoxy resin composition of this invention obtained as described above has low modulus of elasticity, coefficient of linear expansion and water absorption and excellent water absorption and is excellent in heat resistance, so that it can be used not only as sealants for semiconductors but also as coating compositions, laminates, adhesives and the like.

The present invention will hereinafter be described in further detail by the following production examples, examples, comparative examples and tests.

Production Example 1

In a reactor equipped with a stirrer, a thermometer, a partial condenser and a total condenser, were charged 50 g (0.26 mole) of α,α,α'-trimethoxy-p-xylene (purity = 99.9 wt.%), 489.4 g (5.2 moles) of phenol and 0.14 g of diethylsulfate. A crosslinking reaction was then conducted under stirring while the temperature of the liquid mixture was maintained at about 140°C. Methanol which was formed during the reaction was taken out of the system through a vent. After being reacted for about 2 hours, unreacted phenol was eliminated by distillation under reduced pressure and a resinous product remaining in the reactor was then cooled.

The reaction product thus obtained was a reddish brown solid. It was then ground in a dry atmosphere, whereby a phenolic resin was obtained in a pale red, fine powder form. The softening point of that resin was 98.5°C (as measured in accordance with JIS K-2548). This resin will hereinafter be referred to as "Phenolic Resin A".

Production Example 2

In a reactor equipped with a stirrer, a thermometer, a partial condenser and a total condenser, were charged 54.5 g (0.26 mole in terms of the sum of aromatic nuclei) of a chlorinated xylene mixture containing α,α,α'-trichloro-p-xylene (purity: 87.5 wt.%), 244.7 g (2.6 moles) of phenol and 0.07 g of diethylsulfate. A crosslinking reaction was then conducted under stirring while the temperature of the liquid mixture was maintained at about 140°C. Hydrochloric acid gas formed during the reaction was taken out of the system through a vent. After being reacted for about 2 hours, unreacted phenol was eliminated by distillation under reduced pressure and a resinous product remaining in the reactor was then cooled. The reaction product thus obtained was a reddish brown solid. It was then ground in a dry atmosphere, whereby a phenolic resin was obtained in a pale red, fine powder form. The softening point of that resin was 104°C (as measured in accordance with JIS K-2548). This phenolic resin will hereinafter be referred to as "Phenolic Resin B".

Example 1

An o-cresol novolak epoxy resin having an epoxy equivalent of 214 and a softening point of 75°C ("EOCN102S", trade name; product of Nippon Kayaku Co., Ltd.), Phenolic Resin A obtained in Production Example 1, triphenylphosphine (hereinafter called "TPP") as a curing accelerator, fused silica as a filler, carnauba wax as a mold releasing agent, carbon black as a colorant and glycidoxypropyltrimethoxysilane as a coupling agent were mixed in weight proportions shown in Table 1 and then milled at 100-110°C for 5 minutes. The resulting sheet-like kneaded mixture was cooled and then ground, whereby an epoxy resin composition was obtained.

The composition was next compression molded under 200 $kg/cm^2$ at 170°C for 5 minutes so that a molded product of a prescribed configuration was obtained. The molded product was then subjected to post-curing at 175°C for 5 hours. The glass transition temperature, coefficient of linear expansion, modulus of flexural elasticity and water absorption of the molded product so obtained were determined.

Testing methods:

Glass transition temperature (unit: °C)

- A temperature-linear expansion curve of each molded product was drawn using a TMA apparatus manufactured by Rigaku Denki K.K. The temperature corresponding to a bent point of the curve was recorded as a glass transition temperature. The measurement was conducted over a temperature range of from room temperature to 250°C while the temperature raising rate was controlled at 2°C/min.

Coefficient of linear expansion (unit: x $10^{-5}$/°C)

- The coefficient of linear expansion of each molded product was measured over a temperature range of from room temperature to the glass transition temperature.

Modulus of flexural elasticity (unit: $kg/mm^2$)

- Using a molded product of 4 mm x 127 mm x 10 mm, its modulus of flexural elasticity was measured at a testing velocity of 2 mm/min and an inter-support distance of 64 mm on an autograph manufactured by Shimadzu Corporation.

Water absorption (unit: %)

- The water absorption of each molded product of 50 mm x 50 mm x 2 mm was determined from a weight difference after the sample was boiled at 100°C for 24 hours.

The results so obtained are summarized in Table 1.

Examples 2-4 & Comparative Examples 1-2

In each of the examples and comparative examples, a molded product was obtained as in Example 1 by using the raw materials shown in Table 1. Its respective properties were measured similarly. The results so obtained are also presented in Table 1.

Table 1

| | | Example | | | | Comparative Example | |
|---|---|---|---|---|---|---|---|
| | | 1 | 2 | 3 | 4 | 1 | 2 |
| Epoxy resin | Kind | EOCN | EOCN | TF* | EOCN | EOCN | EOCN |
| | Wt. parts | 100 | 100 | 100 | 100 | 100 | 100 |
| Curing agent | Kind | Resin A | Resin B | Resin A | Resin A | PN*** | XL**** |
| | Wt. parts | 61 | 61 | 79 | 61 | 49 | 81 |
| Curing accelerator | Kind | TPP | TPP | TPP | 24Z** | TPP | TPP |
| | Wt. parts | 1 | 1 | 1 | 1 | 1 | 1 |
| Fused silica | (wt. parts) | 500 | 500 | 554 | 500 | 464 | 560 |
| Carnauba wax | (wt. parts) | 1.5 | 1.5 | 1.5 | 1.5 | 1.5 | 1.5 |
| Carbon black | (wt. parts) | 1 | 1 | 1 | 1 | 1 | 1 |
| Glycidoxypropyl trimethoxysilane | (wt. parts) | 2 | 2 | 2 | 2 | 2 | 2 |
| Glass transition temp. (°C) | | 153 | 155 | 160 | 165 | 143 | 130 |
| Modulus of elasticity ($kg/mm^2$) | | 1450 | 1455 | 1460 | 1453 | 1530 | 1450 |
| Water absorption | (%) | 0.43 | 0.42 | 0.44 | 0.45 | 0.49 | 0.42 |
| Coefficient of linear expansion | ($\times 10^{-5}$/°C) | 1.80 | 1.81 | 1.82 | 1.80 | 1.85 | 1.84 |

* TF: Trifunctional epoxy resin, "EPPN-501H", trade name; product of Nippon Kayaku Co. Ltd.; epoxy equivalent: 164; softening point: 53.2°C.
** 24Z: 2-Ethyl-4-methylimidazole.
*** PN: Phenolic novolak resin; softening point: 96°C.
**** XL: "XL-225L", trade name; product of Mitsui Toatsu Chemicals, Inc.; xylok resin.

Tests

The epoxy resin composition produced in each of Examples 1-4 and Comparative Examples 1 and 2 was formed into tablets. The tablets were subjected low-pressure transfer molding at 175°C under 70 kg/cm$^2$ for 120 seconds to seal a 6 mm x 6 mm chip within a 52p package for a solder cracking test and a 3 mm x 6 mm chip within a 16p SOP package for a soldering moisture resistance test.

The test devices so sealed were subjected to the following solder cracking test and solder moisture resistance test.

Testing methods:

Solder cracking test

- Sealed test devices were left over for 72 hours in an environment of 85°C and 85% RH. After the test devices were dipped for 10 seconds in a solder bath of 260°C, the test devices were microscopically observed for any external cracks. The number of devices which developed cracks was counted.

Soldering moisture resistance test

- Sealed test devices were left over for 72 hours in an environment of 85°C and 85% RH. After the test devices were dipped for 10 seconds in a solder bath of 260°C, the test devices were subjected to a pressure cracker test (at 125°C and 100% RH) to measure the time at which the percent open defective of their circuits reached 50%.

The test results are shown in Table 2.

Table 2

| | | | Solder cracking resistance (# of cracked samples/# of tested samples) | Soldering moisture resistance (time until 50% defective) |
|---|---|---|---|---|
| Test | Example | 1 | 0/16 | $\geq$ 300 hours |
| | | 2 | 0/16 | $\geq$ 300 hours |
| | | 3 | 0/16 | $\geq$ 300 hours |
| | | 4 | 0/16 | $\geq$ 300 hours |
| | Comp. Ex. | 1 | 16/16 | 180 hours |
| | | 2 | 3/16 | 290 hours |

**Claims**

1. An epoxy resin composition comprising as essential components:
   (a) an epoxy resin, and
   (b) a phenolic resin of a structure formed by crosslinking a phenolic compound with trifunctional aromatic residual groups represented by the following formula (1):

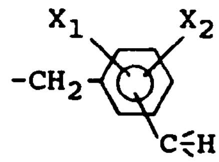

(1)

wherein $X_1$ and $X_2$ independently mean a hydrogen or halogen atom or a lower alkyl group.

2. The composition of claim 1, wherein the phenolic resin and the epoxy resin are mixed at such a ratio that 0.5-1.5 moles of hydroxyl groups of the phenolic resin are contained per mole of epoxy groups of the epoxy resin.

3. The composition of claim 1, wherein the phenolic resin is a resin obtained by subjecting a trifunctional aromatic compound, which is represented by the following formula (2) :

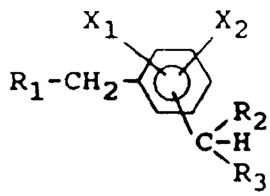

(2)

wherein $R_1$, $R_2$ and $R_3$ independently mean a hydroxyl group, a halogen atom or a $C_1$-$C_3$ lower alkoxyl group or $R_2$ and $R_3$ may together stand for an oxygen atom, and $X_1$ and $X_2$ independently mean a hydrogen or halogen atom or a lower alkyl group, and the phenolic compound to polycondensation.

4. The composition of claim 3, wherein the trifunctional aromatic compound represented by the formula (2) is selected from the group consisting of α,α,α'-trihaloxylenes, α,α,α'-trialkoxyxylenes, hydroxymethylbenzaldehyde and halomethylbenzaldehydes.

5. The composition of claim 3, wherein the phenolic compound is selected from the group consisting of phenol, o-cresol, m-cresol, p-cresol, catechol, resorcin, 2,2-bis(p-hydroxyphenyl)propane, bis(p-hydroxyphenyl )methane, p-ethylphenol, p-t-butylphenol, o-phenylphenol, m-phenylphenol, p-phenylphenol, α-naphthol , β-naphthol, phenanthrol and hydroxyanthracene.

6. The composition of claim 3, wherein the number average molecular weight of the phenolic resin is in a range of 350-2,000.

7. The composition of claim 3, further comprising, as a curing agent for the epoxy resin, not more than 80 wt.% based on the phenolic resin selected from the group consisting of novolak resins, phenolaralkyl resins, dicyclopentadiene-modified phenolic resins and resol-type phenolic resins.

8. The composition of claim 3, wherein the epoxy resin is selected from the group consisting of glycidyl ethers of novolak resins, phenolaralkyl resins, dicyclopentadiene-modified phenolic resins and resol-type phenolic resins; glycidyl ethers of alcohol; glycidyl esters of carboxylic acid; glycidyl substitutes of resins of compounds containing an active hydrogen atom bonded to a nitrogen atom; and alicyclic epoxy resins.

9. The composition of claim 3, wherein the epoxy resin has a softening point of 60-100°C and an epoxy equivalent of 100-400.

10. The composition of claim 3, further comprising 0.001-5 wt.% based on the epoxy resin of a curing accelerator selected from the group consisting of amines, imidazoles, organic phosphines and tetraphenylborons.

11. The composition of claim 3, further comprising 40-85 wt.% based on the composition of an inorganic filler.

European Patent Office

# EUROPEAN SEARCH REPORT

Application Number

EP 92 30 7600

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| P,X | EP-A-0 475 605 (MITSUI TOATSU CHEMICALS INC.)<br>* page 6, line 55 - line 56; claims 1-11 *<br>--- | 1-11 | C08G61/02<br>C08L63/00<br>C08L63/02 |
| A | PATENT ABSTRACTS OF JAPAN<br>vol. 13, no. 308 (C-617)(3656) 14 July 1989<br>& JP-19 5 124 ( MITSUI TOATSU CHEMICALS INC. )<br>* abstract *<br>--- | 1-11 | |
| A | PATENT ABSTRACTS OF JAPAN<br>vol. 10, no. 339 (C-395)(2395) 15 November 1986<br>& JP-61 145 223 ( HITACHI CHEMICAL CO.,LTD )<br>* abstract *<br>----- | 1-11 | |
| | | | TECHNICAL FIELDS SEARCHED (Int. Cl.5 ) |
| | | | C08G<br>C08L |

The present search report has been drawn up for all claims

| Place of search | Date of completion of the search | Examiner |
|---|---|---|
| THE HAGUE | 17 DECEMBER 1992 | A. GLANDDIER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)